(19) Europäisches Patentamt
European Patent Office
Office européen des brevets

(11) Veröffentlichungsnummer: **0 066 821**
**B1**

(12) # EUROPÄISCHE PATENTSCHRIFT

(45) Veröffentlichungstag der Patentschrift: **16.04.86**

(51) Int. Cl.⁴: **D 06 P 3/66**, C 09 B 67/26, D 06 P 3/82

(21) Anmeldenummer: **82104754.5**

(22) Anmeldetag: **29.05.82**

(54) **Verfahren zum Färben und Bedrucken von Textilmaterial aus Cellulosefasern oder deren Mischungen mit anderen Fasern mit Reaktivfarbstoffen.**

(30) Priorität: **06.06.81 DE 3122560**

(43) Veröffentlichungstag der Anmeldung:
**15.12.82 Patentblatt 82/50**

(45) Bekanntmachung des Hinweises auf die Patenterteilung: **16.04.86 Patentblatt 86/16**

(84) Benannte Vertragsstaaten:
**AT BE CH DE FR GB IT LI**

(56) Entgegenhaltungen:
**EP-A- 0 024 332**
**DE-A- 2 244 246**
**DE-A- 2 913 718**
**DE-B- 2 834 998**
**FR-A- 2 098 249**
**FR-A- 2 267 352**
**FR-A- 2 278 834**
**TEXTILE RESEARCH JOURNAL, Band 40, Nr. 4, April 1970, Seiten 392-394, Princeton, New-Jersey, USA "Mechanism of dyeing cellulose with sodium beta-arylsulfonylethyl sulfates (remazols)"**
**TECHNOLOGY OF THE TEXTILE INDUSTRY U.S.S.R., Nr. 4, 1964, Seiten 106-111, Manchester, G.B. L.A. KOVZHIN et al.: "An efficient method of dyeing capron with reactive vinyl-sulphonic dyes"**
**MELLIAND TEXTILBERICHTE, Band 45, Nr. 1, 1964, Seiten 51-54, Heidelberg, DE. N. KOLLODZEISKI: "Remazolon-Farbstoffe, eine neue Farbstoffgruppe für die Wolle"**

(73) Patentinhaber: **HOECHST AKTIENGESELLSCHAFT**
**Postfach 80 03 20**
**D-6230 Frankfurt am Main 80 (DE)**

(72) Erfinder: **Glander, Siegfried, Dr.**
**Wiesenweg 15**
**D-6232 Bad Soden am Taunus (DE)**
Erfinder: **Schön, Franz**
**Eisenacher Weg 4**
**D-6230 Frankfurt am Main 80 (DE)**

**EP 0 066 821 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft das Ausziehfärben, Klotzfärben oder Bedrucken von Textilmaterial aus Cellulosefasern oder deren Mischungen mit anderen Fasern unter Verwendung von solchen Reaktivfarbstoffen, welche anfänglich in einer für sich allein mit der Fasersubstanz nicht reaktionsfähigen Form vorliegen und Reaktivgruppen aufweisen, die sich von Estern leicht abspaltbarer ein- oder mehrwertiger, anorganischer oder organischer Säuren mit β-Hydroxyäthylsulfon-Verbindungen herleiten.

Das Färben in der Hauptsache von Cellulosefasern mit sogenannten Reaktivfarbstoffen ist schon seit längerer Zeit bekannt und hat sich aufgrund der damit erhältlichen klaren wie trüben Nuancen und auch wegen der erzielbaren Echtheiten in der Praxis in weitem Umfang sehr bewährt. Derartige Farbmittel sind von organischer Herkunft und werden im COLOUR INDEX, 3. Auflage 1971 unter dem Gattungsbegriff « Reactive Dyes » aufgeführt. Es handelt sich hierbei um Farbstoffe aus der Reihe von Azo-, Anthrachinon- oder Phthalocyanin-Verbindungen, die auch als Metallkomplexe vorliegen können und welche mindestens eine mit der Faser reaktionsfähige Gruppe enthalten. In einigen Fällen liegt aber eine derartige mit der Faser reagierende Gruppe nicht von vornherein vor, sondern wird als solche aus einem Vorläufer davon durch geeignete Maßnahmen erst im Zuge des Färbeprozesses gebildet. Ein sehr geläufiges Beispiel für den zuletzt erwähnten Typ sind Reaktivfarbstoffe auf Basis der Ester von leicht abspaltbaren ein- oder mehrwertigen, anorganischen oder organischen Säuren, insbesondere der Schwefelsäureester, mit β-Hydroxyäthylsulfon-Verbindungen (Ester-Farbstoffe), bei denen während des Färbeprozesses durch den Einfluß alkalisch wirkender Mittel die faserreaktive Vinylsulfon-Form (VS-Form) der Farbstoffe entsteht.

Zum Colorieren von Cellulosetextilien aller Art werden Reaktivfarbstoffe sowohl im Textildruck als auch bei Auszieh- oder Kontinue-Färbeprozessen eingesetzt. Herkömmlicherweise wird die Fixierung dieser Farbstoffe auf der Faser in der Praxis vornehmlich aus wäßrigem Medium sowie in erster Linie in Anwesenheit alkalisch wirkender Mittel vorgenommen. Als Fixieralkalien eignen sich solche, welche aus der üblichen Handelsform der Ester-Farbstoffe die Einstellung der mit der Polyhydroxylfaser reaktionsfähigen VS-Form besorgen, je nach dem Grad der Reaktivität der Farbstoffe schon bei Raumtemperatur oder erst unter Zuhilfenahme von Erwärmen : Bei den Ausziehverfahren werden für diese Aufgabe in der Regel Natronlauge, Soda oder Trinatriumphosphat verwendet, bei Klotzverfahren sind hierfür außer Natronlauge und Soda auch Wasserglas und Natriumbicarbonat gebräuchlich.

Der Fixiervorgang der Reaktivfarbstoffe findet im Ausziehprozeß unmittelbar nach deren Aufziehen auf die Faser bei Temperaturen bis zum Kochpunkt des Färbebades statt, im Rahmen der Klotzfärbetechnik in einem an die Applikation angeschlossenen separaten Arbeitsgang durch Verweilen, Dämpfen oder Trockenhitzebehandlung. Nachteilig wirkt sich bei den Klotzverfahren die verminderte Haltbarkeit der Reaktivfarbstoffe im alkalischen Bereich aus. So bilden sich beispielsweise unter diesen Bedingungen aus VS-Farbstoffen infolge Hydrolyse β-Hydroxyäthylsulfon-Farbstoffe, die nicht mehr mit der Faser reagieren können. Dieses unerwünschte Verhalten läßt sich zwar durch eine zweibadige Behandlungsweise umgehen, indem zunächst der nicht reaktive Ester-Farbstoff alkalifrei appliziert und sodann das Aufbringen der erforderlichen Alkalimenge in einem zweiten Klotzvorgang besorgt wird, jedoch muß bei Verfolgung dieser Taktik dafür eine Zwischentrocknung in Kauf genommen werden.

Beim Drucken mit Reaktivfarbstoffen kann man der im alkalischen Medium gegebenen geringen Haltbarkeit der Reaktivfarbstoffe dadurch ausweichen, daß sogenannte Alkalispender den Druckpasten beigemischt werden, die erst beim Fixierprozeß unter höheren Temperaturen Alkali freisetzen. Solche Alkalispender sind beispielsweise Natriumbicarbonat, trichloressigsaures Natrium oder Dicyandiamid.

Aus der Literatur sind fernerhin aber auch Färbetechniken bekannt geworden, wobei die handelsüblichen Reaktivfarbstoffe aus wäßrigem Medium im neutralen oder sauren Milieu auf Cellulosefasern oder Cellulose enthaltende Fasermischungen appliziert und dort bei Hochtemperatur (HT)-Bedingungen fixiert werden. Ausziehverfahren dieser Art sind z. B. in der DE-B-28 35 035, DE-A-29 13 718 sowie DE-A-29 33 343 beschrieben, Klotzverfahren werden in der DE-B-28 34 998 erwähnt. Allerdings ist die im Falle solcher Verfahren oftmals geringe Farbausbeute insbesondere bei den Ester-Farbstoffen unbefriedigend.

Die FR-A-2 267 352 betrifft Farbstoffpräparationen von sulfogruppenhaltigen Reaktivfarbstoffen bestimmter Struktur, die eine Vielfalt unterschiedlicher Reaktivsysteme aufweisen können und bei denen der Farbstoff, so wie er bei seiner Produktion anfällt, in eine flüssige und lagerstabile Handelsware überführt wird, was man durch Beimischung von sogenannten Stellmitteln, die einen schwach sauren pH-Wert bewirken, bewerkstelligt. Das bedeutet aber auch, daß hierbei ohne Unterschied bereits reaktive Farbstoffe oder nicht reaktive Farbstoffe (im obigen Sinne Vorläufer) unverändert in eine flüssige Zubereitung mit dem pH-Wert 3-7 gebracht werden. Soweit es um die Anwendung dieser Präparate geht, so sind die bekannten Flüssigeinstellungen von Reaktivfarbstoffen nicht unmittelbar zum Färben bestimmt, sondern werden in der beschriebenen Lagerform dazu benutzt, um erst Färbebäder oder Druckpasten daraus herzustellen, welche sodann ganz normal in der für Reaktivfarbstoffe üblichen Weise auf Baumwolle appliziert und fixiert werden, d. h. in alkalischem Medium bei normalen Temperaturen.

Es wurde nun gefunden, daß Reaktivfarbstoffe, welche in handelsüblicher Beschaffenheit in einer von sich aus mit der Fasersubstanz nicht reaktionsfähigen Form vorliegen und dem Typ der vorgängig

beschriebenen Ester-Farbstoffe angehören, dann mit guten Farbausbeuten auf Cellulosefasern gefärbt bzw. bedruckt werden können, wenn man diese Reaktivfarbstoffe vor dem Applizieren auf das Textilmaterial zunächst in wäßrigem Medium durch Behandlung mit alkalisch wirkenden Mitteln in ihre faserreaktive freie Vinylsulfon-Form überführt sowie durch Einstellung eines neutralen bis sauren pH-Bereichs mittels Säurezugabe zu der alkalischen Farbstoff-Lösung in dieser umgewandelten Form chemisch stabilisiert. Das Auszieh- bzw. Klotzfärben oder Bedrucken mit diesen Farbstoff-Zubereitungen einschließlich der Farbstoff-Fixierung erfolgt sodann aus wäßrigem, neutralen bis sauren Milieu entsprechend den gängigen, für diese Applikationstypen erforderlichen Maßnahmen.

Aus der FR-A-20 98 249 geht wohl das Färben oder Bedrucken von cellulosehaltigem Fasermaterial mit bestimmten metallhaltigen, sauren Reaktivfarbstoffen in der VS-Form hervor, wobei während der Farbstoffixierung die Anwendung von alkalischen Mitteln entfallen kann. Jedoch ist dieser Druckschrift weiterhin eindeutig entnehmbar, daß bei Einsatz der Metallkomplex-Farbstoffe in der Esterform diese zwingend mittels alkalisch wirkender Mittel oder durch Einwirkung von Wärme fixiert werden, d. h. die Reaktivfarbstoffe in der Esterform werden nicht vor, sondern nach dem Applizieren auf das Textilmateiral in die VS-Form umgewandelt, ohne daß eine Stabilisierung derselben erfolgt.

Als Farbmittel, die sich nach dem erfindungsgemäßen Prinzip einsetzen lassen, kommen die Umwandlungsprodukte solcher Sulfonyl-Reaktivfarbstoffe in Betracht, mit denen die Faser nach einem Additionsmechanismus über die Vinylsulfon(VS)-Form des Farbstoffes reagiert. Wie schon dargelegt, sind das nach der vorliegenden Erfindung Farbstoffe auf Basis der Ester von leicht abspaltbaren ein- oder mehrwertigen, anorganischen oder organischen Säuren mit β-Hydroxyäthylsulfon-Verbindungen.

Anhand der Schwefelsäureester von β-Hydroäthylsulfon-Farbstoffen (Sulfatoäthylsulfon-Farbstoffe), der von diesem Typ der Reaktivfarbstoffe wohl wichtigsten und am weitesten verbreiteten Handelsform, sollen die erfindungsgemäß erzeugten Zubereitungen und die damit möglichen Färbeverfahren für Textilien, die aus Cellulose bestehen oder solche enthalten, erläutert werden :

Zur Durchführung des erfindungsgemäßen Verfahrens werden diese Ester-Farbstoffe zunächst in Wasser gelöst. Anschließend versetzt man die so erhaltene konzentrierte oder eine schon auf die gewünschte Konzentration verdünnte Farbstoff-Lösung mit einem alkalisch wirkenden Mittel, um die Ester-Gruppierung innerhalb des Sulfatoäthylsulfon-Restes zu spalten und diesen in den unmittelbar faserreaktiven Vinylsulfon-Rest überzuführen. Diese Behandlung wird bei Temperaturen zwischen Raumtemperatur und Kochtemperatur, vorzugsweise bei 25° bis 60 °C sowie im alkalischen Bereich, vorzugsweise bei pH-Werten über 10, vorgenommen. Als alkalisch wirkende Mittel können dazu wäßrige Lösungen von Alkalihydroxiden und/oder von in Wasser alkalisch reagierenden Salzen eingesetzt werden, wie beispielsweise von Soda, Natronlauge, Wasserglas, Trinatriumphosphat u. a. Je nach Temperatur, chemischer Natur des alkalisch wirkenden Mittels und dessen Menge beträgt die Behandlungszeit zur Farbstoff-Umwandlung in die VS-Form 10 Sekunden bis 10 Minuten. Anschließend wird die in dieser Weise gehandhabte alkalische Flotte abgesäuert und zur chemischen Stabilisierung der gebildeten VS-Form auf einen pH-Wert zwischen 7 und etwa 3, vorzugsweise zwischen 6,5 und 5 eingestellt. Das Absäuern erfolgt durch Zugabe einer Mineralsäure, wie beispielsweise Salzsäure, Schwefelsäure oder Phosphorsäure, oder durch Zugabe einer organischen Säure, wie beispielsweise Ameisensäure oder Essigsäure, zu der alkalischen Farbstoff-Lösung. Die so hergestellte Farbstoff-Zubereitung kann, wenn sie vor der Alkalibehandlung schon auf die gewünschte Farbstoffkonzentration eingestellt war, nunmehr direkt zum Färben oder Klotzen des Textilgutes benutzt werden. Das Klotzen wird vorzugsweise bei Raumtemperatur durchgeführt.

Aus Gründen einer rationellen Verfahrensgestaltung werden vorwiegend die in konzentrierter Form angefallenen Lösungen des Ester-Farbstoffs mit dem alkalisch wirkenden Mittel behandelt und diese Lösungen erst nach dem Absäuern durch Auffüllen mit Wasser auf die gewünschte Konzentration für das Färbebad, Klotzbad oder die Druckpaste verdünnt. Dabei ist es ratsam, nach der Verdünnung den pH-Wert nochmals zu kontrollieren und gegebenenfalls zu korrigieren. Es ist allerdings nicht notwendig, die konzentrierten Farbstoff-Zubereitungen unmittelbar vor dem Färben, Klotzen oder Drucken herzustellen. Sie können vielmehr auch auf Vorrat angesetzt werden und sind hierbei in Form von « Flüssig-Farbstoffen » oder in der Druckpaste längere Zeit lagerfähig. Durch Eindampfen gegebenenfalls bis zur Trockne kann die Konzentration einer derartigen Farbstoff-Zubereitung im Einklang mit den Bedürfnissen der Praxis erhöht werden.

Für den Gebrauch in Kontinueprozessen, wo durch fortlaufende Nachsätze eine ständige Konstanthaltung von Flottenkonzentration und Flottenvolumen geboten ist, kann die erfindungsgemäße Erzeugung der von sich aus reaktiven VS-Form aus den Ester-Farbstoffen mittels Alkalibehandlung auch automatisch durch einfaches Dosieren und Mischen von Handelsfarbstoff-Lösung und alkalisch wirkendem Mittel erfolgen, wobei man für den Umwandlungsablauf eine gewisse Verweilzeit einkalkulieren muß. Danach läßt sich mit Hilfe einer zweiten Dosiereinrichtung in Abhängigkeit von einem vorgegebenen, schwach sauren pH-Wert die Sauerstellung des unmittelbar in das eigentliche Applikationsgeschehen eingehenden Färbemediums zuwege bringen.

Als vorteilhaft im Sinne einer vereinfachten Anwendbarkeit hat sich herausgestellt, daß in den flüssigen Zubereitungen nach der Erfindung die Löslichkeit der Vinylsulfon-Farbstoffe in Wasser, die vorher schon als gelöste Sulfatoäthylsulfon-Farbstoffe vorgelegen haben, größer ist als in Fällen, in denen man zur Lösung direkt von pulverförmigen Vinylsulfon-Farbstoffen ausgeht. Dieses Phänomen hat

praktische Bedeutung bei Zubereitungen, in denen sich aufgrund von hoher Konzentration sowie schlechter Löslichkeit beim Lagern kristalliner Farbstoff abgesetzt hat und dieser Niederschlag dann beim Verdünnen wieder aufgelöst werden soll.

Bei den zur Veranschaulichung der Nutzbarmachung nachstehend beschriebenen speziellen Färbe- und Drucktechniken werden die erfindungsgemäß erhaltenen Farbstoff-Zubereitungen im sauren Bereich bei pH-Werten zwischen vorzugsweise 5 und 6,5 eingesetzt. Im sauren Medium ist die Hydrolysegeschwindigkeit relativ gering, so daß weniger hydrolysierter Farbstoff entsteht. Dadurch wird vermieden, daß sich aus der Vinylsulfon-Form eine größere Menge inaktiver Hydroxyäthylsulfon-Farbstoff bildet, der nicht mehr mit der Faser reagieren kann und infolgedessen verloren geht.

Nach der Ausziehmethode werden Cellulosefasern mit den erhaltenen Farbstoff-Zubereitungen erfindungsgemäß aus saurem pH-Bereich gefärbt, wobei das Färben während 15 bis 180 Minuten bei Temperaturen zwischen 20° und 140 °C stattfindet.

Gegenüber den in der Praxis üblichen Ausziehfärbungen von Cellulosefasern mit Reaktivfarbstoffen im alkalischen Milieu bietet das neue Verfahren folgende Vorteile :

Mischgewebe können einbadig gefärbt werden. So lassen sich beispielsweise zum Färben von Mischungen aus Polyesterfasern und Baumwolle diese speziellen Reaktivfarbstoff-Zubereitungen zusammen mit Dispersionsfarbstoffen im sauren Bad einsetzen. Weiterhin ist es möglich, Mischgewebe aus natürlichen oder synthetischen Polyamidfasern und Cellulosefasern mit diesen Reaktivfarbstoff-Zubereitungen gemeinsam zu behandeln, wobei beide Fasertypen gleichzeitig gefärbt werden,

dadurch, daß erfindungsgemäß kaum inaktiver β-Hydroxyäthylsulfon-Farbstoff gebildet wird, entstehen keine Farbstoffverluste,

und schließlich wird aufgrund der besseren Farbstoffausnutzung darüber hinaus auch die Abwasserbelastung geringer.

Gegenüber den weiter oben erwähnten bekannten Ausziehfärbungen von Cellulosefasern mit Reaktivfarbstoffen im sauren Milieu zeigt das neue Verfahren bessere Farbausbeuten und ebenfalls eine geringere Abwasserbelastung.

Bei kontinuierlichen Färbeverfahren, wie Klotzfärben und Bedrucken, werden die erhaltenen Reaktivfarbstoff-Zubereitungen ebenfalls im sauren pH-Bereich auf dem Cellulosefasermaterial appliziert. Die Farbstoff-Fixierung erfolgt hierbei anschließend durch Dämpfen oder durch Trockenhitzebehandlung. Vorzugsweise wird diese Hitzebehandlung direkt nach dem Klotzen oder Bedrucken mit der feuchten Ware durchgeführt. Es ist aber auch möglich, das geklotzte oder bedruckte Fasermaterial im Anschluß an den Applikationsvorgang zunächst bei Temperaturen um 100 °C zwischenzutrocknen.

Die Trockenhitzebehandlung wird zwischen 30 Sekunden und 10 Minuten, vorzugsweise 2 bis 5 Minuten, bei Temperaturen zwischen 120° und 240 °C, vorzugsweise 150° bis 200 °C durchgeführt. Das Dämpfen oder HT-Dämpfen erfolgt während 30 Sekunden bis 30 Minuten bei 100° bis 240 °C. Vorzugsweise wird das Dämpfen unter HT-Bedingungen, beispielsweise 5 Minuten bei 180 °C vorgenommen. Beim Dämpfen ist eine gesättigte Dampfatmosphäre nicht unbedingt erforderlich. So wurden beispielsweise gute Ergebnisse erzielt, wenn die Feuchte im Dämpfer etwa 90 % der bei der jeweiligen Temperatur vorliegenden Sättigungsmenge betrug.

Die weiter oben bei der Erläuterung der Ausziehverfahren erfindungsgemäß aufgezählten Vorteile gegenüber dem Stand der Technik gelten zugunsten der vorliegenden Erfindung auch für einen entsprechenden Vergleich im Falle der kontinuierlichen Färbeweise. Hinzu kommt, daß das neue Verfahren keine Probleme hinsichtlich der Haltbarkeit alkalischer Klotzflotten und der hartnäckigen Verschmutzung der Foulardwalzen durch alkalisch wirkende Mittel, wie Wasserglas, aufwirft. Werden die erfindungsgemäßen Reaktivfarbstoff-Zubereitungen zum Drucken eingesetzt, so verlängert sich ebenfalls die Haltbarkeit der Druckpasten gegenüber solchen, die bei bekannten, einphasigen Druckverfahren eingesetzt werden. Weiterhin kann bei Einphasen-Druckverfahren auf die Zugabe von Alkalispendern verzichtet werden.

Wie bei den bekannten Verfahren kann auch beim erfindungsgemäßen Verfahren die Farbstoffausbeute durch Erhöhung der Farbstoffsubstantivität, beispielsweise durch Zugabe von Elektrolyten, gesteigert werden.

Die nachstehenden Beispiele dienen zur Erläuterung der Erfindung. Die darin angegebenen Prozentangaben sind Gewichtsprozente, sofern nichts anderes vermerkt ist, und beziehen sich im Falle von Textilmaterial jeweils auf das Gewicht der trockenen Ware.

## Beispiel 1

100 g des Reaktivfarbstoffes der Formel

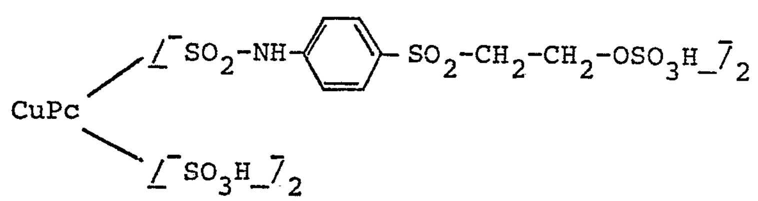

werden mit 500 $cm^3$ kochendem Wasser übergossen und darin gelöst. Nach dem Abkühlen fügt man dieser Farbstofflösung 20 $cm^3$ Natronlauge (32,5 %ig) hinzu, worauf der Ansatz 1 Minuten weiter gerührt und dann mit Essigsäure auf pH 6,5 abgesäuert wird.

Von der so erhaltenen Zubereitung werden nun 100 $cm^3$ entnommen und mit kaltem Wasser auf 1 Liter aufgefüllt. Nach Zusatz von 1 g/l eines handelsüblichen Netzmittels wird mit dieser Klotzflotte ein Baumwollgewebe bei einer Flottenaufnahme von 70 % geklotzt. Das geklotzte Gewebe wird anschließend zur Farbstoff-Fixierung 5 Minuten bei 150 °C gedämpft, wobei im Dämpfer eine Feuchte von 95 % der Sättigungsmenge vorgegeben ist.

Nach dem Dämpfen wird das gefärbte Textilgut zunächst mit Wasser kalt und heiß gespült und daraufhin in einem wäßrigen Bad unter Mitwirkung von 1 g/l eines nichtionogenen Waschmittels 10 Minuten kochend geseift. Man erhält eine türkisblaue Färbung mit den für diesen Farbstoff charakteristischen Echtheiten.

Beispiel 2

50 g des Farbstoffes Reactive Orange 16 mit der C.I.-Nr. 17 757 werden in 200 $cm^3$ kochendem Wasser gelöst und danach durch Zufügen von 800 $cm^3$ warmem Wasser verdünnt. Die etwa 60 °C warme Lösung wird nun mit Hilfe von Soda auf pH 10 eingestellt und 10 Minuten bei dieser Temperatur belassen. Anschließend wird der Ansatz mittels Salzsäure abgesäuert, bis sich der pH-Wert 6 einreguliert hat. Vor dem Klotzen werden dieser Farbstoff-Zubereitung noch 3 g eines handelsüblichen Netzmittels zugesetzt.

Die weitere Behandlung zum Klotzen der Ware entspricht den in Beispiel 1 beschriebenen Maßnahmen. Man erhält eine tiefe Orangefärbung mit den für diesen Farbstoff charakteristischen Echtheiten.

Beispiel 3

20 g des in Beispiel 1 beschriebenen Farbstoffes werden, wie in Beispiel 2 beschrieben, zubereitet. Nach Zusatz von 2 g eines handelsüblichen Netzmittels wird mit der so hergestellten Klotzflotte ein Baumwollgewebe bei einer Flottenaufnahme von 75 % geklotzt. Nun wird das geklotzte Gewebe zunächst bei 90° bis 100 °C getrocknet, worauf man die Farbstoff-Fixierung auf der Ware mittels Heißluftbehandlung während 3 Minuten bei 200 °C beendet.

Anschließend wird das klotzgefärbte Cellulosematerial mit Wasser kalt und heiß gespült und danach 10 Minuten kochend geseift. Man erhält eine türkisblaue Färbung mit den für diesen Farbstoff charakteristischen Echtheiten.

Beispiel 4

2 g des Farbstoffes Reactive Blue 19 mit der C.I.-Nr 61 200 werden in 50 $cm^3$ heißem Wasser gelöst und mit kaltem Wasser auf 1 Liter verdünnt. Nun wird die Farbstofflösung mit Natronlauge auf pH 11 eingestellt und nach Verweilen von 1 Minute unter diesen Bedingungen wird Essigsäure dem Ansatz zugegeben, bis in der Flotte ein pH-Wert von 6,4 erreicht ist.

Nachdem man dem so erhaltenen Färbebad noch 80 g Natriumsulfat zugefügt hat, werden damit in einem Druckbehälter 100 g mercerisiertes Baumwollgarn unter Ausziehen 1 Stunde bei 130 °C gefärbt. Anschließend wird das gefärbte Textilgut mit Wasser kalt und heiß gespült sowie in einer wäßrigen Flotte mit 1 g/l eines nichtionogenen Waschmittels 20 Minuten kochend geseift. Man erhält eine blaue Färbung.

Beispiel 5

50 g des Reaktivfarbstoffes der Formel

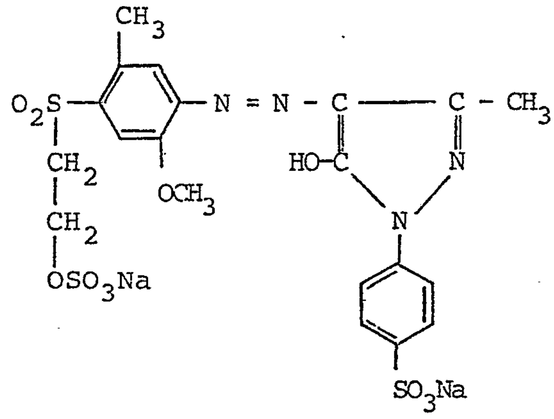

werden in 50 $cm^3$ heißem Wasser gelöst und mit kaltem Wasser auf 1 Liter verdünnt. Dieser Farbstofflösung fügt man nun 20 $cm^3$ Natronlauge (32,5 %ig) hinzu und nach 1 Minute Verweilzeit wird die Zubereitung dann mit Hilfe von Essigsäure neutralisiert sowie auf den pH-Wert von 6,5 eingestellt.

Mit der so hergestellten Flotte werden Gewebe aus

a) mercerisierter Baumwolle und

b) Zellwolle

geklotzt, worauf man die geklotzten Gewebe zur Farbstoff-Fixierung in beiden Fällen anschließend zu einem Teil

(I) 3 Minuten bei 180 °C mit Heißluft behandelt, zu einem anderen Teil

(II) 5 Minuten bei 130 °C dämpft, wobei die Dampfmenge im Dämpfer 95 % der bei dieser Temperatur möglichen Sättigungsmenge entspricht.

Die Färbungen werden daraufhin mit Wasser kalt und heiß gespült sowie in einem wäßrigen Bad von 1 g/l eines nichtionogenen Waschmittels 10 Minuten bei Kochtemperatur geseift. Man erhält jeweils gelbe Färbungen.

Ähnliche Ergebnisse in entsprechenden Farbtönen lassen sich erzielen, wenn gemäß der Verfahrensweise des zuvor erläuterten Beispieles die in den nachstehenden Beispielen 6 bis 9 angegebenen Farbstoffe eingesetzt werden :

## Beispiel 6

Reaktivfarbstoff der Formel

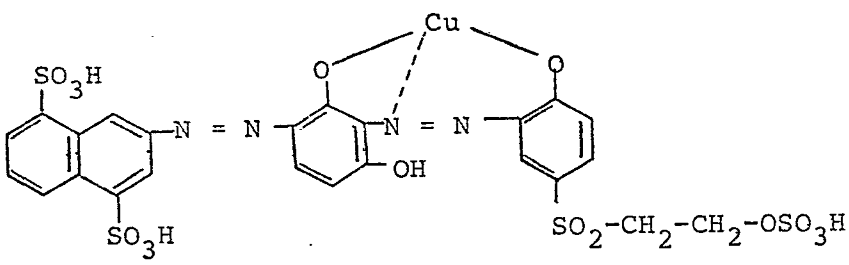

## Beispiel 7

Farbstoff Reactive Orange 16 mit der C.I.-Nr. 17757.

## Beispiel 8

Farbstoff Reactive Blue 19 mit der C.I.-Nr. 61200.

## Beispiel 9

Farbstoff Reactive Black 5 mit der C.I.-Nr. 20205.

## Beispiel 10

30 g des gemäß Beispiel 7 angewandten Farbstoffes werden, wie in Beispiel 5 beschrieben, zubereitet.

Mit dieser Flotte werden nun zwei Mischgewebe aus Polyamid/Baumwolle bzw. Polyamid/Zellwolle geklotzt und anschließend zur Farbstoff-Fixierung 6 Minuten bei 130 °C gedämpft (90 %Feuchte im Dämpfer). Die Färbungen werden sodann mit Wasser kalt und heiß gespült sowie in einem wäßrigen Bad mit 1 g/l eines nichtionogenen Waschmittels bei 60 °C geseift. Man erhält Orangefärbungen, wobei jeweils beide Faserkomponenten der Mischgewebe nuancengleich gefärbt sind.

## Beispiel 11

40 g des Reaktivfarbstoffes der Formel

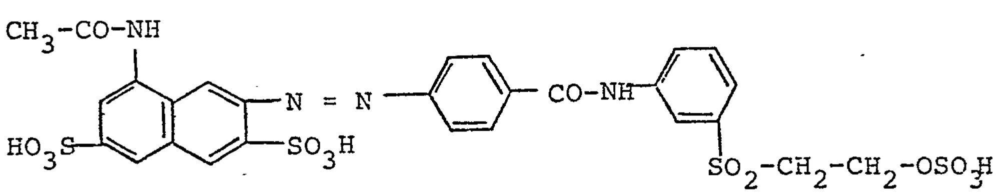

werden in 200 $cm^3$ heißem Wasser gelöst. Nach dem Abkühlen fügt man der Farbstofflösung 10 $cm^3$ Natronlauge (32,5 %ig) hinzu und läßt den Ansatz 1 Minute verweilen, worauf dieser mittels Essigsäure neutralisiert und dann ein pH-Wert von 6,5 eingestellt wird.

Die so hergestellte Farbstoffzubereitung wird nun mit Wasser und einer üblichen Verdickung auf 1 kg Druckpaste aufgefüllt, dabei werden der letzteren noch 50 g/kg Harnstoff zugesetzt. Mit dieser Druckpaste wird sodann ein Baumwollgewebe bedruckt und der Farbstoff durch Dämpfen während 5 Minuten bei 180 °C (98 % Feuchte im Dämpfer) fixiert. Anschließend wird das Textilgut mit Wasser kalt und heiß gespült sowie in einer wäßrigen Flotte unter Mitwirkung von 1 g/l eines nichtionogenen Waschmittels 15 Minuten kochend geseift. Man erhält ein rot bedrucktes Gewebe.

Beispiel 12

50 g des Farbstoffes Reactive Blue 19 mit der C.I.-Nr. 61200 werden, wie in Beispiel 5 beschrieben, zubereitet. Dieser Farbstoff-Flotte werden dann noch 40 g des Farbstoffes Disperse Yellow 64 mit der C.I.-Nr. 47023 und 2 g eines handelsüblichen Netzmittels zugesetzt.

Mit dieser Klotzflotte wird nun ein Mischgewebe aus Polyester/Baumwolle (Mischungsverhältnis 67/33) geklotzt. Nach dem Klotzen wird das Gewebe zur Fixierung der beiden Farbstoffe 4 Minuten bei 150 °C gedämpft (95 % Feuchte im Dämpfer). Anschließend wird die so gefärbte Ware mit Wasser kalt und heiß gespült sowie mit einem wäßrigen Bad enthaltend 2 g/l eines nichtionogenen Waschmittels 10 Minuten bei 70 °C geseift. Man erhält auf dem Mischgewebe eine Bicolor-Färbung, wobei der Polyesterfaseranteil gelb und der Baumwollanteil blau gefärbt ist.

Beispiel 13

30 g des gemäß Beispiel 11 zur Anwendung gelangenden Farbstoffs werden in 200 $cm^3$ kochendem Wasser gelöst und danach durch Zufügen von 800 $cm^3$ kaltem Wasser verdünnt. Diese Farbstofflösung wird nun mit 5 $cm^3$ Natronlauge (32,5 %ig) versetzt und anschließend 1 Minute unter Rühren behandelt. Dann neutralisiert man die Zubereitung mit Hilfe von Essigsäure und stellt diese auf pH 6,5 ein.

Nach weiterem Zusatz von 2 g/l eines handelsüblichen Netzmittels und 15 g/l Natriumacetat wird mit dieser Klotzflotte ein Baumwollgewebe bei einer Flottenaufnahme von 70 % geklotzt. Das geklotzte Gewebe wird anschließend zur Farbstoff-Fixierung 5 Minuten bei 120 °C gedämpft, wobei im Dämpfer eine Feuchte von 98 % der Sättigungsmenge eingestellt ist. Nach dem Dämpfen wird die gefärbte Ware zunächst mit Wasser kalt und heiß gespült und sodann in einer wäßrigen Flotte mit 1 g/l eines nichtionogenen Waschmittels 10 Minuten kochend geseift. Man erhält eine rote Färbung mit den für diesen Farbstoff charakteristischen Echtheiten.

Beispiel 14

30 g des gemäß Beispiel 2 eingesetzten Farbstoffes werden, wie in Beispiel 13 beschrieben, zubereitet und auf ein Baumwollgewebe appliziert. Das geklotzte Gewebe wird anschließend zur Farbstoff-Fixierung 20 Minuten in Sattdampf bei 100 °C gedämpft, die so erstellte Färbung wird danach mit Wasser kalt und heiß gespült und schließlich kochend geseift. Man erhält eine Orangefärbung mit den für diesen Farbstoff charakteristischen Echtheiten.

**Patentansprüche**

1. Verfahren zum Ausziehfärben, Klotzfärben oder Bedrucken von Textilmaterial aus Cellulosefasern oder deren Mischungen mit anderen Fasern unter Verwendung von solchen Reaktivfarbstoffen, welche anfänglich in einer für sich allein mit der Fasersubstanz nicht reaktionsfähigen Form vorliegen und Reaktivgruppen aufweisen, die sich von Estern leicht abspaltbarer ein- oder mehrwertiger, anorganischer oder organischer Säuren mit β-Hydroxyäthylsulfon-Verbindungen herleiten, dadurch gekennzeichnet, daß man diese Reaktivfarbstoffe vor dem Applizieren auf das Textilmaterial zunächst in wäßrigem Medium durch Behandlung mit alkalisch wirkenden Mitteln in ihre faserreaktive freie Vinylsulfon-Form überführt sowie durch Einstellung eines neutralen bis sauren pH-Bereichs mittels Säurezugabe zu der alkalischen Farbstoff-Lösung in dieser umgewandelten Form chemisch stabilisiert, und daß man diese Farbstoff-Zubereitungen sodann aus wäßrigem, neutralen bis saurem Milieu in üblicher Weise durch Ausziehen, Klotzen oder Bedrucken auf dem Fasermaterial appliziert sowie dort fixiert.

2. Verfahren nach Anspruch 1, dadurch gekennzeichnet, daß als Reaktivfarbstoffe solche verwendet werden, die als Reaktivgruppe mindestens einen Sulfatoäthylsulfon-Rest enthalten.

3. Verfahren nach Anspruch 1, dadurch gekennzeichnet, daß als alkalisch wirkende Mittel wäßrige Lösungen von Alkalihydroxiden und/oder von in Wasser alkalisch reagierenden Salzen verwendet werden.

4. Verfahren nach Ansprüchen 1 bis 3, dadurch gekennzeichnet, daß die Durchführung der Färbungen nach der Ausziehmethode während 15 bis 180 Minuten bei Temperaturen zwischen 20° und 140 °C erfolgt.

5. Verfahren nach Ansprüchen 1 bis 3, dadurch gekennzeichnet, daß die Farbstoff-Fixierung beim Klotzfärben oder Bedrucken durch Trockenhitzebehandlung während 30 Sekunden bis 10 Minuten bei Temperaturen zwischen 120° und 240 °C und/oder Dämpfen während 30 Sekunden bis 30 Minuten bei Temperaturen zwischen 100 °C und 240 °C erfolgt, gegebenenfalls nach einer Zwischentrocknung der Ware im Anschluß an den Applikationsvorgang.

6. Verfahren nach Ansprüchen 1 bis 5, dadurch gekennzeichnet, daß für das Färben oder Bedrucken von Fasermischungen die Zubereitungen der Reaktivfarbstoffe gemeinsam mit Farbstoffen anderer Klassen eingesetzt werden.

7. Verfahren nach Ansprüchen 1 bis 6, dadurch gekennzeichnet, daß Fasermischungen aus Cellulosefasern mit Polyesterfasern oder aus Cellulosefasern mit natürlichen oder synthetischen Polyamidfasern gefärbt oder bedruckt werden.

**Claims**

1. Process for exhaust dyeing, pad-dyeing or printing of textile material made from cellulose fibers or mixtures thereof with other fibers, using reactive dyestuffs which are initially present in a form incapable of reacting on its own with the fiber substance and containing reactive groups derived from esters of easily to split off mono- or polyvalent, inorganic or organic acids with β-hydroxyethylsulfone compounds, which comprises treating said reactive dyestuffs, before application to the textile material, in an aqueous medium with alkaline agents to convert the dyestuffs to their fiber-reactive vinylsulfone form and chemically stabilizing this converted form of the dyestuff by adding acid to the alkaline dyestuff solution so as to attain a neutral to acidic pH range, subsequently applying the dyestuff formulations thus obtained to the fiber material from an aqueous medium which is either neutral or acidic, and after completion of said exhaust dyeing, pad-dyeing or printing according to known methods fixing the dyestuffs on the fiber.

2. Process as claimed in Claim 1, wherein as reactive dyestuffs those are used containing at least one sulfatoethylsulfone radical as reactive group.

3. Process as claimed in Claim 1, wherein as alkaline agents aqueous solutions of alkali metal hydroxides and/or salts having an alkaline reaction in water are used.

4. Process as claimed in Claims 1 to 3, wherein the dyeing by the exhaust method is effected at a temperature of from 20° to 140 °C for a time of from 15 to 180 minutes.

5. Process as claimed in Claims 1 to 3, wherein fixation of the dyestuff after padding or printing is effected by dry heat treatment for 30 seconds to 10 minutes at a temperature of from 120° to 240 °C and/or by steaming for 30 seconds to 30 minutes at a temperature of from 100° to 240 °C, optionally after an intermediate drying of the material after the dyestuff application operation.

6. Process as claimed in Claims 1 to 5, wherein for the dyeing or printing of fiber mixtures said formulations of the reactive dyestuffs are used in combination with dyestuffs of other categories.

7. Process as claimed in Claims 1 to 6, wherein fiber mixtures of cellulose fibers with polyester fibers or of cellulose fibers with natural or synthetic polyamide fibers are dyed or printed.

**Revendications**

1. Procédé de teinture par épuisement, de teinture par foulardage ou d'impression de matières textiles en fibres de cellulose ou leurs mélanges avec d'autres fibres, par utilisation de colorants réactifs qui, au début, se présentent sous une forme qui, à elle seule, n'est pas réactive sur la substance des fibres, et présentent des groupes réactifs qui proviennent d'esters d'acides organiques ou inorganiques, mono- ou polyvalents, facilement éliminables, avec des composés β-hydroxyéthylsulfones, caractérisé en ce qu'on convertit d'abord ces colorants réactifs, avant application sur la matière textile, en milieu aqueux et par traitement par des substances à effet alcalin, en leur forme vinylsulfone libre réactive, et qu'on les stabilise chimiquement dans cette forme convertie en ajustant un pH neutre à acide grâce à une addition d'acide à la solution alcaline de colorant, et en ce que ces préparations de colorant sont ensuite appliquées sur la matière fibreuse par foulardage, épuisement ou impression, d'une manière habituelle, dans un milieu aqueux, neutre à acide, avant d'y être fixées.

2. Procédé selon la revendication 1, caractérisé en ce qu'on utilise comme colorants réactifs ceux qui contiennent comme groupe réactif au moins un radical sulfatoéthylsulfone.

3. Procédé selon la revendication 1, caractérisé en ce qu'on utilise comme substance à effet alcalin des solutions aqueuses d'hydroxydes alcalins et/ou de sels à réaction alcaline dans l'eau.

4. Procédé selon les revendications 1 à 3, caractérisé en ce que les teintures par le procédé par épuisement sont effectuées pendant 15 à 180 minutes à des températures comprises entre 20 et 140 °C.

5. Procédé selon les revendications 1 à 3, caractérisé en ce que le fixage du colorant, dans la teinture par foulardage ou l'impression, s'effectue par traitement thermique de séchage pendant 30 secondes à 10 minutes à des températures comprises entre 120 et 240 °C et/ou par vaporisage pendant 30 secondes à 30 minutes à des températures comprises entre 100 et 240 °C, éventuellement après un séchage intermédiaire de l'article après l'opération d'application.

6. Procédé selon les revendications 1 à 5, caractérisé en ce que, pour la teinture ou l'impression de mélanges de fibres, les préparations des colorants réactifs sont utilisées en même temps que des colorants d'autres classes.

7. Procédé selon les revendications 1 à 6, caractérisé en ce qu'on procède à la teinture ou à l'impression de mélanges de fibres de fibres cellulosiques et de fibres de polyester, ou de fibres cellulosiques et de fibres de polyamide naturelles ou synthétiques.